# EUROPEAN PATENT SPECIFICATION

(11) **EP 1 831 057 B1**
(45) Date of publication and mention of the grant of the patent: **27.08.2008**
(21) Application number: 05825121.6
(22) Date of filing: 21.11.2005
(51) Int. Cl.: B60R 21/20

(54) **CURTAIN AIRBAG MODULE**
VORHANGAIRBAGMODUL
MODULE D'AIRBAG EN RIDEAU

(30) Priority: 06.12.2004 US 634023 P
(43) Date of publication of application: 12.09.2007
(73) Proprietor: KEY SAFETY SYSTEMS, INC., Sterling Heights, MI 48314 (US)
(72) Inventor: COON, Jeffery, S., Sterling Heights, MI 48312 (US); JU, Chang-Hwan, Rochester, MI 48307 (US)
(74) Representative: Gislon, Gabriele
(86) International application number: PCT/US2005/042339
(87) International publication number: WO 2006/062738

(56) References cited:
- EP-A- 0 957 010
- US-A1- 2003 090 092
- US-A1- 2004 108 693
- US-B1- 6 364 349

## Description

The present invention relates to a curtain airbag installed along the roof rail of a vehicle.

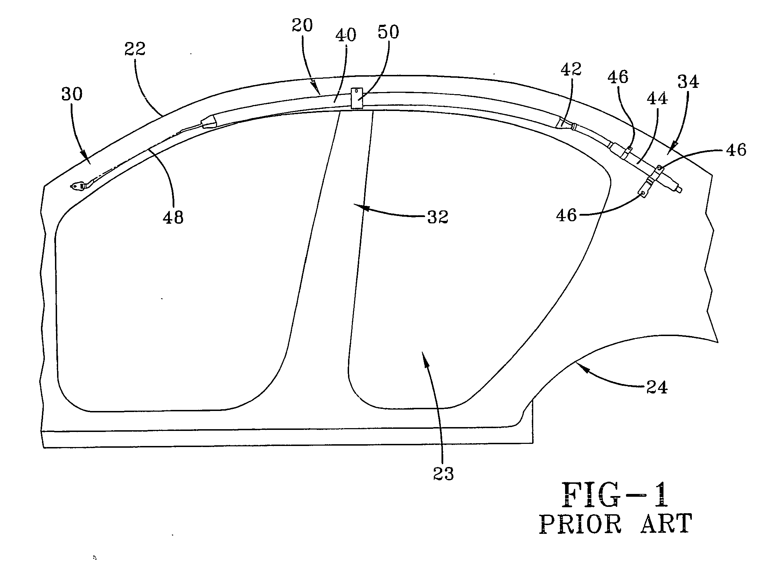

Figure 1 illustrates a prior art curtain airbag module 20 installed along the roof rail 22 of a passenger compartment 23 of a vehicle 24. In typical curtain airbag installations the airbag extends from the A-pillar 30 across the B-pillar 32 to the C-pillar 34 of the vehicle. The airbag module 20 comprises a rectangular or oblong airbag 40 folded or rolled into a cylindrical configuration. While in this compact configuration, the airbag is slid into a cover that can take many shapes. One such cover is a long cylindrical, perforated or breakable cover or sleeve that maintains the airbag in its folded or rolled condition.

The airbag will generally include an inlet 42 in communication with an inflator 44. The inflator may be directly connected to the inlet or inserted in a housing for an indirect connection. In other installations the inlet is formed by an opening in an inflatable portion of the airbag and the inflator is inserted directly therein. The inflator is fastened by one or more fasteners or brackets 46 to the vehicle structure. In Figure 1 the inflator is mounted to the C-pillar. However, the inflator 44 can be mounted proximate the B or A-pillars. As known in the art, the lower corners of the airbag are often secured to adjacent corresponding pillars by a strap, which is often called a tether. One forward strap 48 is shown in Figure 1 in a stored configuration along the A-pillar. The various components are covered by one or more trim pieces hiding them in normal use. The airbag module is typically secured to the roof rail by fasteners that secure the inflator and the airbag. The module may also include a deflector or ramp 50 located proximate the B-pillar, which urges the airbag as it inflates to move away from the B-pillar.

US 2003/0090092A1, which is considered as the closest prior art, discloses a curtain airbag module comprising a ramp in combination with an airbag which includes all the features of the preamble of claim 1.

The present invention comprises an improved deflector or ramp that is not fastened to the vehicle, B-pillar or to the B-pillar trim. The improved ramp is used in conjunction with and forms a part of a curtain airbag module. The airbag may include a distribution tube located proximate a top portion of the at least one inflatable region of the airbag, the tube having a first end adapted to receive inflation gas. The distribution tube has at least one set of openings for communication of inflation gas to inflatable regions of the airbag. The airbag has a plurality of tabs, which extend through an optional, hollow tubular cover placed about the airbag. The tabs are secured proximate the roof rail of the vehicle. In the illustrated embodiment, the airbag has two major inflatable regions with passages connecting the inflatable regions. One of the tabs extends through the cover and through the deflector or ramp.

Figure 1 shows a prior art curtain airbag module in a vehicle's passenger compartment.

Figure 2 shows a curtain airbag module of the current invention.

Figure 2a shows the airbag in an inflated configuration.

Figure 3 shows the construction of the neck of the airbag.

Figure 4 shows the neck and neck reinforcement portion of the airbag.

Figure 5 is a cross-sectional view at section 5-5 of Figure 2.

Figures 6 and 7 show details of mounting tabs of the airbag.

Figure 8 is an isometric view of a B-pillar ramp or deflector.

Figure 8a is an isometric view of the ramp in an open configuration.

Figure 9 is a side view of the B-pillar ramp.

Figure 9a is a top view of the B-pillar ramp.

Figure 10 is a front view of the B-pillar ramp.

Figure 11 a is a cross-section through section 11 a-11 a of Figure 16.

Figure 11a is a cross-sectional view of an alternate embodiment.

Figure 12 shows an anti-rotation member used with an airbag tab.

Figure 13 is an isometric view of another embodiment of the invention.

Figure 14 shows a ramp in a mounted configuration.

Figure 15 is a side view of the ramp.

Figure 16 shows an alternative embodiment of the invention.

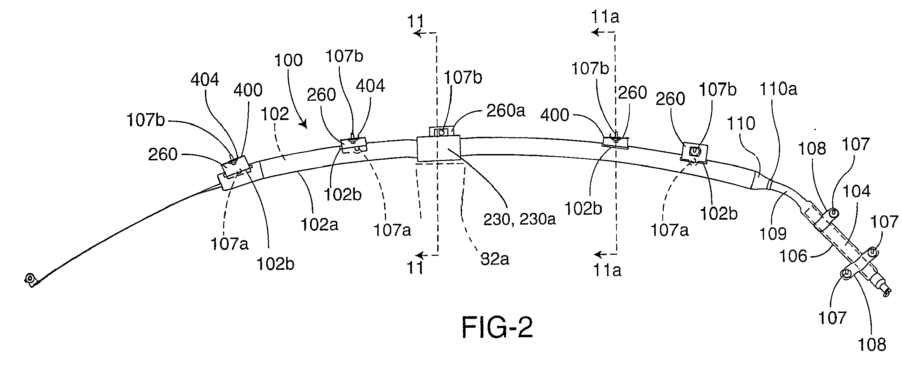

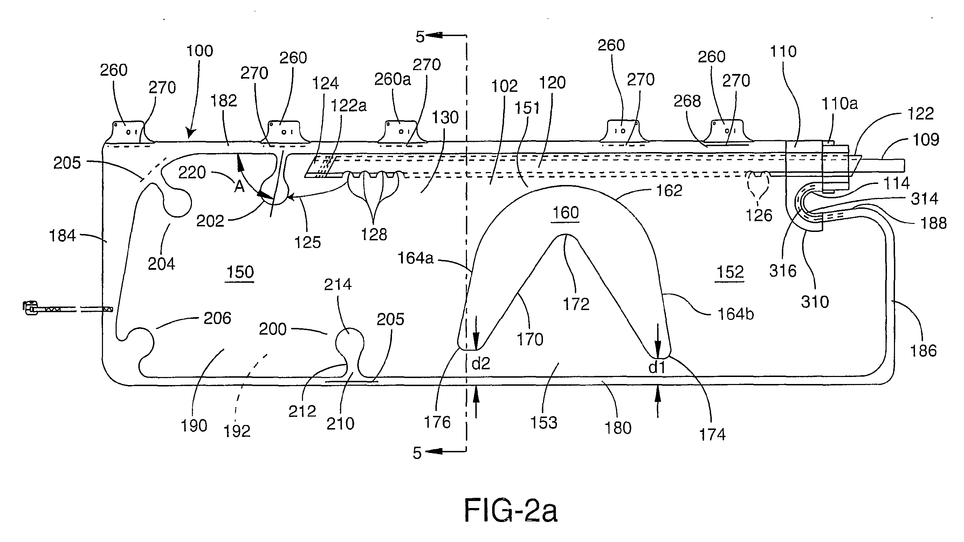

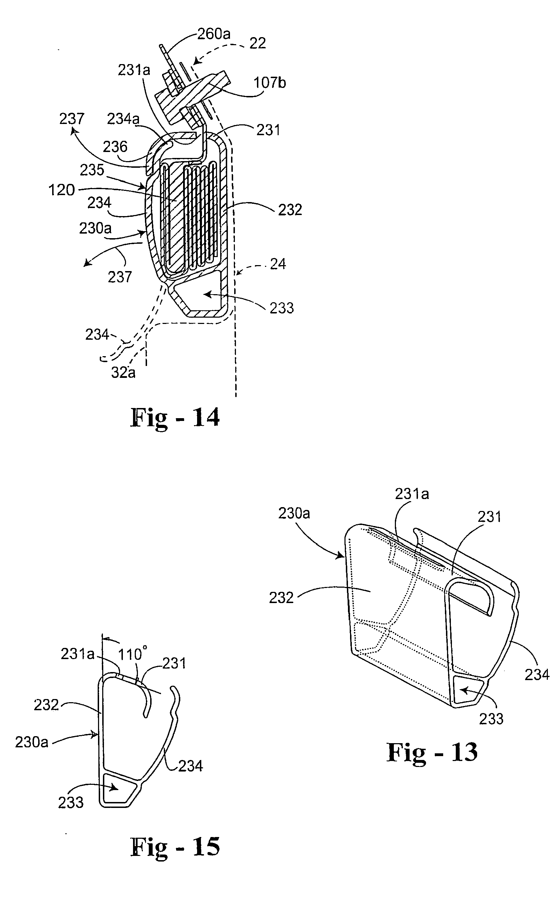

An improved bracket, deflector or ramp 230 or 230a for a curtain airbag is part of an airbag module, as shown in Figure 13. The ramp has a hollow body 235 through which a folded curtain airbag is received. The ramp is usable with many different types of airbags and modules. An airbag module 100, shown in Figure 2, and an airbag 102 are exemplary of those modules and airbags that can use the new ramp 230. The module 100 also comprises an airbag 102 and an inflator 104 mounted in a hollow, tubular housing 106. The housing 106 is secured to the C-pillar 34 by appropriate fastening means such as threaded fasteners 107 received through mating connectors or brackets 108 that are formed as part of the housing. The housing 106 can be as simple as the brackets themselves or, for example, the housing can be a cylindrical tube configured to receive a cylindrical inflator.

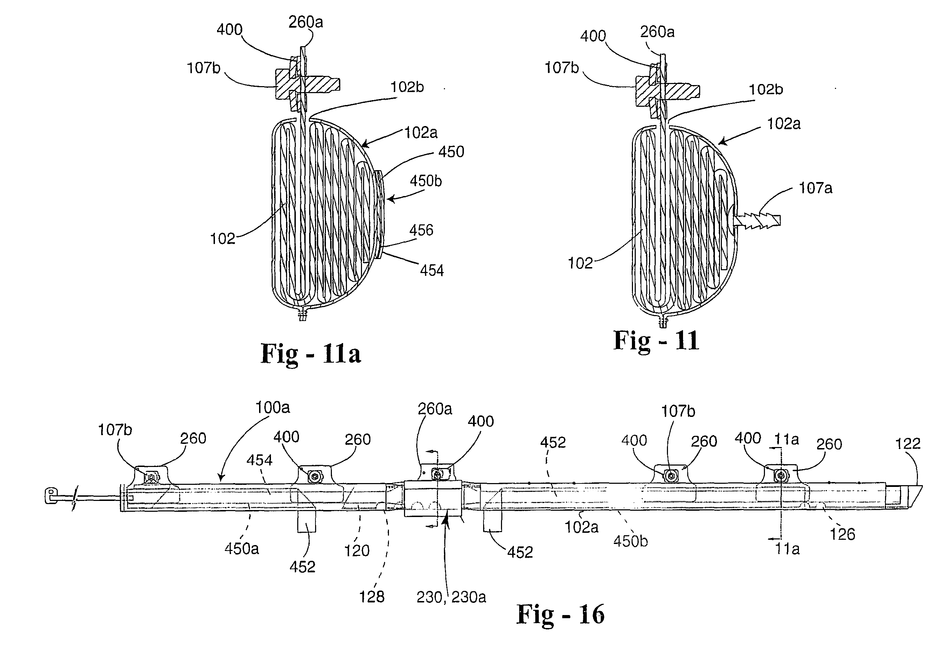

The airbag is shown in Figure 2 in a stored configuration. The airbag is shown in an inflated or unflolded condition in Figure 2a. In the stored configuration the airbag is covered with a thin, long tearable cover 102a, which is generally known in the art. A plurality of the fasteners 107a, such as plastic pushpins, extend through a like plurality of openings in the cover as shown in Figures 2 and 11. The fasteners 107a extend rearward from the cover 102a. During installation of the module to the roof rail, the module is initially aligned to the roof rail and the fasteners 107a are pushed into openings in the roof rail, thereby providing a first step in the mounting of the module. Subsequently, with the module 100 generally in place, the module is further secured to the roof rail by another set of threaded fasteners 107b. These threaded fasteners 107b extend through flaps or tabs 260 of the airbag 102 and through an anti-rotation member 400. A fastener 107a is not associated with ramp 230.

The exemplary airbag 102 has a region that is in communication with the inflator. This region is generally referred to as a neck or neck portion 110 and can take many shapes. In the illustrated embodiment, the neck or neck portion 110 is in communication with an extension tube 109 (see Figure 2a) of the housing (see Figure 2). Alternately, the neck is connected directly about the inflator if a housing is not used.

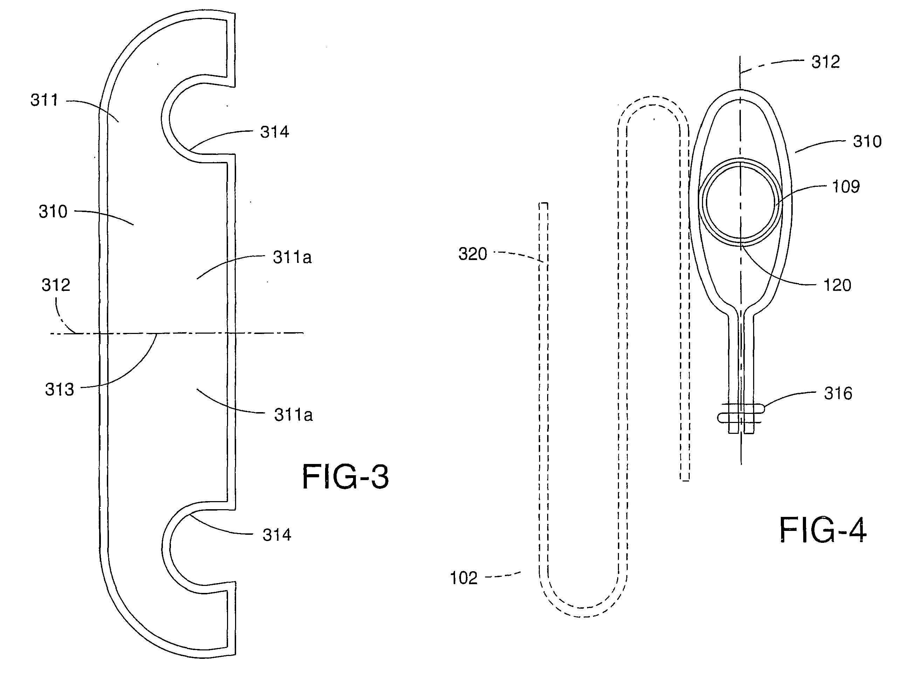

It is difficult to have the neck of the airbag lie flat, since the inflator 104 or tube 109 causes the neck to take a circular profile (in cross-section). The airbag 102 further has proximate the neck 110, a reinforcement panel 310, which is fitted about the exterior of the airbag to provide additional strength to the neck 110, as well as an added fabric layer that protects the neck portion 110 from damage. The panel 310 is shown in Figure 3 and has an oblong body 311 with opposing halves 311 a located about a centerline 312. At least one slot 313 is formed along the centerline 312. The body has opposing symmetrically positioned notches 314. The panel 310 is folded over the centerline 312 to get the general shape shown in Figure 2a.

The notches 314 are aligned with similarly shaped notches 114 formed in the neck 110. The neck panel 310 is sewn to the airbag at a seam 316 that secures each panel half 311a to opposite sides of the neck 110. The neck 110, neck panel (and a distribution tube discussed below) are secured about distribution tube 109 by a circular, hoop or ring-type fastener 110a as shown in Figures 2 and 2a. Figure 4 shows the neck 110 in cross-section and also shows other portions 320 (in phantom line) of the airbag 102 folded and closely positioned to the neck in the relative placement these other portions would take in the stored configuration of the airbag. The panel 310 prevents these other portions 320 of the airbag 102 from rubbing against the material forming the neck 110 as the airbag inflates.

The airbag 102 has a distribution tube 120. The distribution tube is inserted in the neck 110 and positioned adjacent the upper side of the airbag. The distribution tube 120 has a first end 122 that is received in the neck and positioned about the housing extension 109 and secured in a fluid-tight manner by the fastener 110a (see Figure 2a). The tube 120 has another end 124 that may be opened or, as illustrated, closed such as by stitches or staples. The tube further has a plurality of openings 126 positioned proximate the neck and a further plurality of openings 128 positioned proximate the end 124. Preferably the number of openings 126 is two, while the number of openings 128 is four. The reason for this construction is to distribute the inflation gas into the airbag so the front and the rear of the curtain airbag fill uniformly and quickly at all operating temperatures.

The tube can be a solid, extruded metal tube or, alternatively, made from a dense, woven material. The tube is received in the upper portion 130 of the airbag and can be held in place by a fastener such as a thin breakable wire or plastic strip or even a sewn stitch 122a that extends through the tube and the panels of the airbag to hold end 124 in place, while not appreciably restricting the dimension of the opened diameter of the distribution tube 120.

In Figure 2a the airbag has a forward or first inflatable chamber 150 and a rear inflatable chamber 152. The chambers 150, 152 communicate with each other via open regions on the airbag that form passages 151,153 linking the chambers. The passages 151, 153 can also be inflatable regions of the airbag.

Positioned between chambers 150, 152 is an optional non-inflatable region 160. The non-inflatable region 160 has an arcuately shaped upper surface 162, typically shaped as a segment of a circle and two tangentially extending straight portions 164a, 164b to avoid unnecessary stress risers forming as the airbag inflates. The lower portion of the non-inflatable region is triangle shaped as designated by reference line 170 having two descending lobes. The center 172 of the lower triangle shape 170 is arcuately shaped. The non-inflatable portion has first and second arcuately shaped ends 174, 176. Each of the ends 174, 176 is spaced a predetermined distance from the lower edge or seam 180 to reduce cushion stiffness from chamber 150 of the airbag 102. In this embodiment the distance d1 between end 174 and the lower edge 180 of the airbag is smaller than the distance d2 between the end 176 and the edge 180 of the airbag.

The airbag has an upper edge 182, as well as lateral edges 184, 186, which together define the periphery of the airbag. The upper edge 186 has a concave portion 188 that defines the elongated shape of the neck 110.

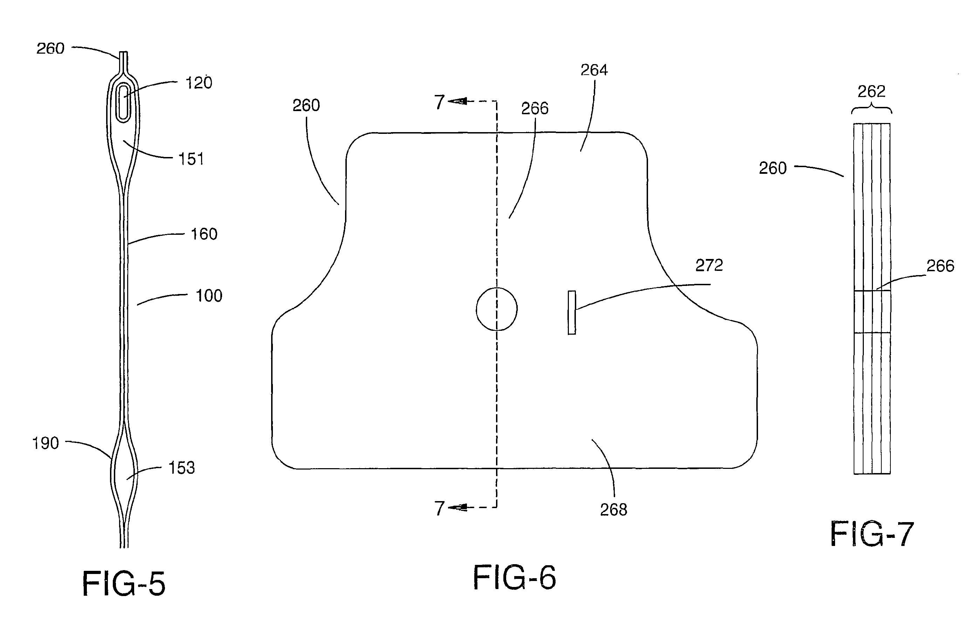

In general, the inflatable portions of the airbag are formed by a first and second, or inner 190 and outer 192 fabric panels. In Figure 2a, only the inner panel 190 is visible. The outer panel 192 is generally identical and shown in a number of the cross-sectional views, such as Figure 5.

Certain regions of the inner and outer panels 190, 192 such as regions 200, 202, 204, 206 of the forward chamber 150 are configured to have the inner and outer panels touch or be coextensive, integral, or commonly connected (depending upon the technique used to form the airbag). These commonly connected regions 200-206 each generally comprises a shoulder or base 210, a neck 212 and a head 214. The construction of regions 200, 204 is similar, as the shoulder, neck and head are generally the same size and these regions are situated perpendicular to an imaginary line 205 extending through the periphery of the airbag proximate the regions 200, 204. Region 202 is similar to regions 200, 204 in that region 102 also has a neck substantially narrower than its corresponding head 214. The region 202 is oriented at an angle A relative to the local periphery of the airbag 220. Region 202 is the closest to the openings 128 in tube 120 and will be impacted by a relatively high velocity stream of inflation gas indicated by arrow 125. The angular orientation of region 202 lessens stress in the adjacent portions of the airbag during airbag inflation.

These interconnected regions in the airbag serve to reduce the inflation capacity of the airbag and selectively reduce the pressure generated in the material forming the airbag as the airbag rapidly inflates. The region 206 is similar to the other regions 200-204 in that it has a shoulder, neck and head portion; however, the width of the neck approximates that of the head. This reduces cushion volume while at the same time providing adequate vehicle occupant head protection.

The airbag has a plurality of tabs 260 that are shown in greater detail in Figures 6 and 7. Each tab is formed by a plurality of layers 262 of material, typically four pieces or panels of woven fabric. Each layer, piece or panel of woven material is laid on top of one another. Subsequently all of the layers are simultaneously laser cut. The laser cutting melts the periphery of each piece and forms a peripheral weld 264 connecting each of the layers together as an integral unit. The resulting construction is a tab 260 having increased strength. A mounting opening 266 is formed in the tab by laser or die cutting. The lower edge 268 of the tab is sewn to the top portion 182 of the airbag by one or more lines of stitching 270. After the airbag 102 is fitted in the cover 102a each tab 260 is pulled out of the cover through a slit 102b.

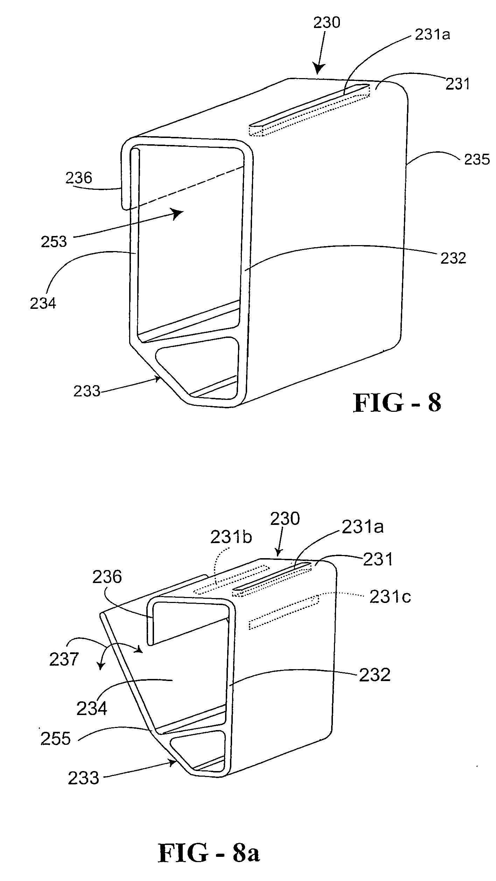

In Figure 1 a center portion of the prior art curtain generally extends across the B-pillar. This is the case with the present invention also. Typically this B-pillar also supports an anchor point called a D-ring of a seat belt system. In addition, various plastic trim parts (not shown) are attached to the metal under-structure forming the B-pillar. It is desirable to include in the airbag module a diversion mechanism, which acts as a deflector or ramp to urge the airbag, as it inflates, to move away from any potential obstructions formed on or by the B-pillar such as the D-ring and trim parts. Such a ramp has been previously proposed in the art. The present invention utilizes a new and improved ramp mechanism illustrated in Figures 8-11.

Figures 8 - 11, as well as Figures 13-15, illustrate the details of B-pillar ramps or deflectors 230, 230a according to the present invention. The deflectors or ramps 230, 230a are generally hollow and are preferably made as a plastic, extruded part having the configuration shown. Each ramp 230, 230a has a body 235 having a top 231, rear wall 232, a front wall 234 and a bottom 233. The top has a down-turned leg or lip 236, which holds the top of the front side or wall 234 in place, prior to inflation, with the airbag positioned through the hollow body 235. The top 231 has an opening 231a. Each ramp also has a double or reinforced bottom 233. The bottom is formed as a tube 233a that provides increased stiffness of the body 235. The tube has a cross-section in the shape of a multi-sided polygon having an upper wall or side 252 and a lower wall or side 254. The upper wall 252 in combination with sides 232, 234b forms a cavity or chamber 253 (see Figure 8, for example) for receipt of the airbag 102. The side 254 is formed of a number of segments such as segments 254a, b and c, in cooperation with upper side 252.

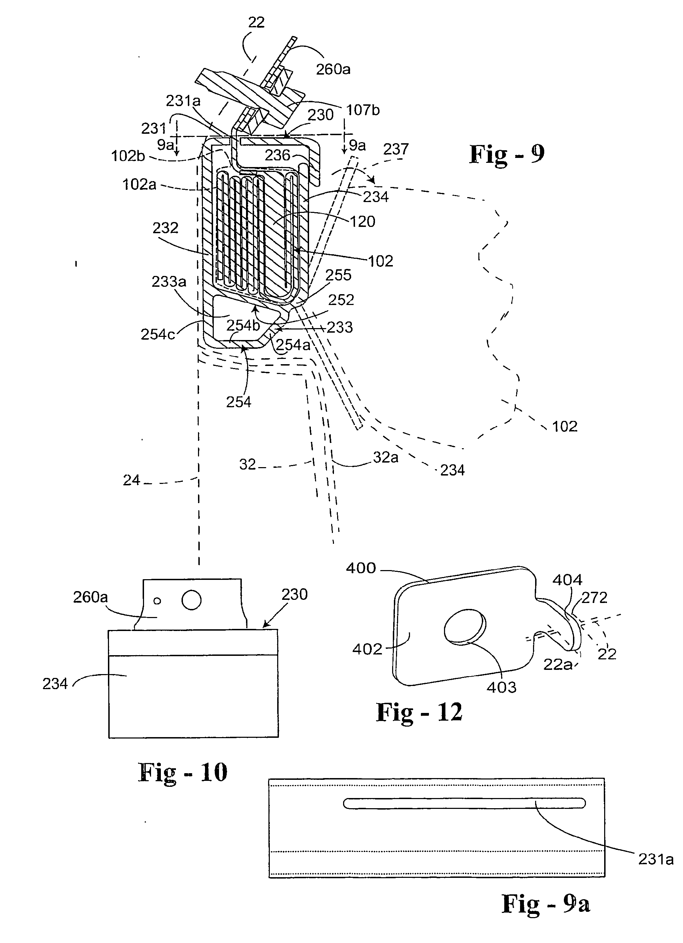

When mounted to the roof rail, each ramp 230 or 230a is suspended or tethered from an airbag tab 260. In this position, the bottom 233 lightly touches the top of the B-pillar trim 32a or is slightly spaced therefrom. Each deflector 230, 230a is stamped or cut from a longer extrusion. In Figures 8a and 15 the front wall 234 is positioned in front of the down-turned leg 236. After the ramp 230, 230a is placed about the folded airbag 102, with or without cover 102a, the front side 234, which is flexible, is manipulated to lie behind the leg 236 (achieving the configuration shown in Figures 8 and 9 for ramp 230 and Figures 13 and 14 for 230a), which keeps it in place in the closed configuration.

In the embodiment of Figures 13 and 14 the leg 236 and top portion 231 are curved. Further, the top portion 234a and middle portion 234b of front side 234 are arcuately shaped or bowed outwardly. The top portion 234a is configured to fit behind the leg 236 as shown in Figures 13 and 14 and has the same curvature as the leg 236.

In the illustrated invention the opening 231a is located toward the rear of the top 231. This is not a limitation of the invention. The opening 231a can be placed through other surfaces of the ramp 230 as shown in phantom lines in Figure 8a, for example, at a more forward location on the top 231 (shown as opening 231 b) or near the top of rear side 232 (shown as opening 231 c). The tab, which extends through opening 231a, is located on the airbag so the base of the tab is adjacent the location of the opening 231 a.

Figures 2, 9 and 11 illustrate the deflector 230 in a mounted configuration in a vehicle. Figure 14 is a cross-sectional view showing ramp 230a in its mounted configuration. One of the tabs such as 260a of the airbag, extends through opening 231 a, and threaded fastener 107b extends through the mounting openings in tab 260a. This construction permits the lower portions of the deflector to stay intact during inflation of the airbag and to provide a region 255, forming a hinge (at the intersection of side 234 and upper side or wall 252 of the bottom 233), permitting side 234 of the deflector to rotate and be pushed forward of the down-turned leg 236 as the airbag inflates. The top of the side 234 and the top 231 are not secured together by a tear seam, which permits the side 234 to move away from the top with less effort and greater speed. Region 255 is located on an inboard side of the deflector and assists in cooperation with wall 234 in guiding the inflating airbag away from the B-pillar. The B-pillar trim can be installed before or after installation of the airbag 102 and ramp 230, 230a providing flexibility in manufacturing. Each ramp has a limited degree of motion, as it is not secured to either the vehicle or the B-pillar trim.

As the airbag deploys it expands and it urges the inside wall 234 outwardly and away from the leg 236 in the direction of arrow 237 (see Figure 9 or Figure 13). Depending upon the relative stiffness of the wall 234 and leg 236, the leg 236 may be bent upwardly by motion of the wall 234 or it may generally stay in place. After side 234 has rotated downward, it will be placed on the top of the B-pillar trim 32a (see Figure 9) and between the B-pillar trim and the inflating airbag, protecting the airbag. This configuration will be achieved for the ramp 230a as well. In this configuration the front wall 243 of ramp 230a is rotated onto the B-pillar trim as shown in Figure 14. Numeral 234c is representative of the lowered portion of the front wall. Figure 9 shows the airbag as it is inflating. The deflector or ramp 230 essentially operates as a ramp, urging or deflecting the inflating airbag away from obstructions on the B-pillar that might prevent the airbag from fully extending or which might slow the inflation of the airbag due to, for example, rubbing friction between the airbag and those obstructions. The folded airbag 102 enclosed in its optional cylindrical casing or cover 102a is also shown in Figure 8.

Figure 11a is a cross-section through section 11a-11a of Figure 16. In an earlier embodiment the cover 102a could be held to the vehicle by a series of pushpins 107b. These pushpins have been eliminated in Figure 11a, where two lengths of double-sided tape 450a, 450b have been attached to the rear of the cover 102a. The length 450a is on one side of ramp 230, 230a and length of tape 250b is on an opposite side of the ramp 230, 230a. Each length of tape 450a, 450b extends across all tabs on each side of the ramp. A greater number of shorter lengths of tape can be used. Number 452 represents a pull-tab that initially extends below the bottom of the cover 102a as shown in Figure 16, which shows a module 100a with the double-sided tape 450a,b. The tape can be used with either ramp 230, 230a. During installation of module 100a into the vehicle 24, the module is secured to vehicle 22 by fasteners 107b. Thereafter, each pull-tab 452 (see Figure 16) and its associated adhesive protective layer 254 (which cover the adhesive 456) is removed exposing a layer of adhesive 456 (see Figure 11 a). The cover 102a and adhesive layer 456 are pushed against the roof rail 22.

In the embodiment of Figures 13-15, as the airbag expands, the curved front surface of top portion 234a slides upon the curved rear wall of leg 236. In view of the common curvature of these regions, less energy and time is needed to open ramp 230a than ramp 230, having a more rectangular shape.

Preferably the airbag 102 is integrally woven utilizing a Jacquard head and weaving process, which integrally forms the panels 190, 192 and the peripheral edge of the airbag, as well as the non-inflated region and the commonly connected regions. The airbag can alternatively be manufactured by overlaying two substantially identical pieces of fabric and sewing them together to form the periphery and neck region, the non-inflated region and the neck region 110, and the commonly connected regions 200-206. Alternatively, and as known in the art, the airbag can be manufactured from one larger piece of fabric folded about its middle and sewn together along most if not all of its other common sides. In this construction the folded-over portion of the larger panel forms the lower edge of the airbag without the need to weave or sew separate panels together.

Each fastener 107b is received in an anti-rotation member 400 shown in Figure 12 that assists in mounting each tab 260 to lie flat against the roof rail and prevent each tab 260, 260a from rotating. The anti-rotation member 400 (see Figure 12) has a small plate 402 having an opening 403 therein for the fastener 107b and a projection or hook 404, which is pushed into a receiving slot 22a formed along the roof rail 22 of the vehicle. Each hook extends through a slot 272 (see Figure 7) in a corresponding tab 260. Each member 400 is aligned to a respective tab 260 and the fastener 107b inserted therethrough. The combination of the fastener 107b and hook 404 keeps each airbag tab 260 in place.

## Claims

1. A curtain airbag module (100) comprising a ramp (230, 230a) in combination with an airbag (102), the airbag when folded is configured to be placed proximate a roof rail (22) of a vehicle (24), the vehicle including a trim part (32a) covering a pillar (32) of the vehicle (24),
the ramp (230, 230a) comprising a body (235) having a hollow cross-section, the body (235) including a flexible top wall (231) having a down-turned leg (236), a rear wall (232), a bottom (233) and a flexible front wall (234), the top wall (231) configured to hold the front wall (234) in place prior to inflation of the airbag (102), the top wall (231) and front wall (234) configured to permit the front wall (234) to slide out from under the top wall (231) as the airbag (102) inflates,
**characterised in that** at least one tab (260) extends from the airbag to loosely suspend or tether the ramp (230, 230a) to the vehicle.

2. A curtain airbag module (100) according to Claim 1 wherein the front wall (234) is configured to face an interior of a vehicle passenger compartment, prior to the inflation of the airbag (102) with the airbag positioned through the hollow body (235), the front wall (234) being separable from the top wall (231) by action of the inflating airbag (102) and configured to be moved by the inflating airbag to a position positioned in front of the down-turned leg (236) on a top portion of the trim part (32a) to prevent the inflating airbag from being damaged by the top of the trim part (32a), the ramp (230, 230a) including an opening (231 a) through which the tab (260) extends.

3. A curtain airbag module (100) according to either of Claims 1 or 2 wherein the down-turned leg (236) is either curved or flat.

4. A curtain airbag module (100) according to any of Claims 1 - 3 wherein the top portion (234a) of the front wall (234) is either curved or flat.

5. A curtain airbag module (100) according to Claim 4 wherein the curvature of the down-turned leg (236) and the curvature of the top portion (234a) of the front wall (234) are substantially the same.

6. A curtain airbag module (100) according to any of Claims 1 - 3 wherein a middle portion (234b) of the front wall (234), below the top portion (234a), is either flat or curved.

7. A curtain airbag according to any of Claims 1 - 6 wherein the tab (260) extends through the opening (231 a) in the ramp (230, 230a).

8. A curtain airbag according to any of Claims 1-7 wherein the bottom (233) is of a doubled wall construction.

9. A curtain airbag according to Claim 2 wherein the opening (231 a) is located in either the top wall (231) or rear wall (232).

10. A curtain airbag according to any of Claims 1 - 9 wherein at least a portion of the airbag (102) is fitted in a cover (102a) and a layer of adhesive (456) is secured to the cover (102a) to secure the cover to a part of the vehicle.

## Patentansprüche

1. Vorhang-Airbagmodul (100), das eine Rampe (230, 230a) in Kombination mit einem Airbag (102) umfasst, wobei der Airbag, wenn er gefaltet ist, dafür konfiguriert ist, nahe einer Dachschiene (22) eines Fahrzeugs (24) angeordnet zu werden, wobei das Fahrzeug einen Innenverkleidungsteil (32a) einschließt, der eine Säule (32) des Fahrzeugs (24) abdeckt,
wobei die Rampe (230, 230a) einen Körper (235) umfasst, der einen hohlen Querschnitt hat, wobei der Körper (235) eine flexible obere Wand (231), die einen nach unten gedrehten Schenkel (236) hat, eine hintere Wand (232), eine untere (233) und eine flexible vordere Wand (234) einschließt, wobei die obere Wand (231) dafür konfiguriert ist, die vordere Wand (234) vor dem Aufblasen des Airbags (102) an ihrem Platz zu halten, wobei die obere Wand (231) und die vordere Wand (234) dafür konfiguriert sind, zu ermöglichen, dass die vordere Wand (234) unter der oberen Wand (231) herausgleitet, wenn sich der Airbag (102) aufbläst,
**dadurch gekennzeichnet, dass** sich wenigstens eine Lasche (260) von dem Airbag aus erstreckt, um die Rampe (230, 230a) locker an dem Fahrzeug aufzuhängen oder anzubinden.

2. Vorhang-Airbagmodul (100) nach Anspruch 1, wobei die vordere Wand (234) dafür konfiguriert ist, vor dem Aufblasen des Airbags (102) zu einem Inneren eines Fahrzeug-Fahrgastabteils zu zeigen, wobei der Airbag durch den hohlen Körper (235) angeordnet ist, wobei die vordere Wand (234) durch die Wirkung des sich aufblasenden Airbags (102) von der oberen Wand (231) getrennt werden kann und dafür konfiguriert ist, durch den sich aufblasende Airbag zu einer Position bewegt zu werden, die vor dem nach unten gedrehten Schenkel (236) an einem oberen Abschnitt des Innenverkleidungsteils (32a) angeordnet ist, um zu verhindern, dass der sich aufblasende Airbag durch den Oberteil des Innenverkleidungsteils (32a) beschädigt wird, wobei die Rampe (230, 230a) eine Öffnung (231a) einschließt, durch die sich die Lasche (260) erstreckt.

3. Vorhang-Airbagmodul (100) nach einem der Ansprüche 1 oder 2, wobei der nach unten gedrehte Schenkel (236) entweder gekrümmt oder flach ist.

4. Vorhang-Airbagmodul (100) nach einem der Ansprüche 1 bis 3, wobei der obere Abschnitt (234a) der vorderen Wand (234) entweder gekrümmt oder flach ist.

5. Vorhang-Airbagmodul (100) nach Anspruch 4, wobei die Krümmung des nach unten gedrehten Schenkels (236) und die Krümmung des oberen Abschnitts (234a) der vorderen Wand (234) im Wesentlichen die gleiche sind.

6. Vorhang-Airbagmodul (100) nach einem der Ansprüche 1 bis 3, wobei ein mittlerer Abschnitt (234b) der vorderen Wand (234), unterhalb des oberen Abschnitts (234a), entweder flach oder gekrümmt ist.

7. Vorhang-Airbag nach einem der Ansprüche 1 bis 6, wobei sich die Lasche (260) durch die Öffnung (231 a) in der Rampe (230, 230a) erstreckt.

8. Vorhang-Airbag nach einem der Ansprüche 1 bis 7, wobei der Boden (233) einen doppelwandigen Aufbau hat.

9. Vorhang-Airbag nach Anspruch 2, wobei die Öffnung (231a) entweder in der oberen Wand (231) oder in der hinteren Wand (232) angeordnet ist.

10. Vorhang-Airbag nach einem der Ansprüche 1 bis 9, wobei wenigstens ein Teil des Airbags (102) in einer Abdeckung (102a) untergebracht ist und eine Lage Klebstoff (456) an der Abdeckung (102a) befestigt ist, um die Abdeckung an einem Teil des Fahrzeugs zu befestigen.

## Revendications

1. Module de coussin d'air du type rideau (100), comprenant une rampe (230, 230a), en combinaison avec un coussin d'air (102), le coussin d'air étant configuré à l'état plié de sorte à être placé à proximité d'un longeron de toit (22) d'un véhicule (24), le véhicule englobant une partie de garniture (32a) recouvrant un montant (32) du véhicule (24) ;
la rampe (230, 230a) comprenant un corps (235) ayant une section transversale creuse, le corps (235) englobant une paroi supérieure flexible (231), comportant une branche tournée vers le bas (236), une paroi arrière (232), une partie inférieure (233) et une paroi avant flexible (234), la paroi supérieure (231) étant configurée de sorte à retenir la paroi avant (234) dans sa position avant le gonflement du coussin d'air (102), la paroi supérieure (231) et la paroi avant (234) étant configurées de sorte à permettre le glissement de la paroi avant (234) hors de sa position au-dessous de la paroi supérieure (231) lors du gonflement du coussin d'air ;
**caractérisé en ce qu'**une patte (260) s'étend à partir du coussin d'air pour suspendre sans serrage ou fixer la rampe (230, 230a) sur le véhicule.

2. Module de coussin d'air du type rideau (100) selon la revendication 1, dans lequel la paroi avant (234) est configurée de sorte à faire face à l'intérieur d'un habitacle du véhicule, avant le gonflement du coussin d'air (102), le coussin d'air étant positionné à travers le corps creux (235), la paroi avant (234) pouvant être séparée de la paroi supérieure (231) par suite de l'action du coussin d'air en cours de gonflement (102) et étant configurée de sorte à être déplacée par le coussin d'air en cours de gonflement vers une position positionnée en face de la branche tournée vers le bas (236), sur une partie supérieure de la partie de garniture (32a), pour empêcher un endommagement du coussin d'air en cours de gonflement par la partie supérieure de la partie de garniture (32a), la rampe (230 , 230a) englobant une ouverture (231a) à travers laquelle s'étend la patte (260).

3. Module de coussin d'air du type rideau (100) selon les revendications 1 ou 2, dans lequel la branche tournée vers le bas (236) est courbée ou plate.

4. Module de coussin d'air du type rideau (100) selon l'une quelconque des revendications 1 à 3, dans lequel la partie supérieure (234a) de la paroi avant (234) est courbée ou plate.

5. Module de coussin d'air du type rideau (100) selon la revendication 4, dans lequel la courbure de la branche tournée vers le bas (236) et la courbure de la partie supérieure (234a) de la paroi avant (234) sont pratiquement identiques.

6. Module de coussin d'air du type rideau (100) selon l'une quelconque des revendications 1 à 3, dans lequel une partie médiane (234b) de la paroi avant (234), au-dessous de la partie supérieure (234a), est plate ou courbée.

7. Module de coussin d'air du type rideau selon l'une quelconque des revendications 1 à 6, dans lequel la patte (260) s'étend à travers l'ouverture (231a) dans la rampe (230, 230a).

8. Module de coussin d'air du type rideau selon l'une quelconque des revendications 1 à 7, dans lequel la partie inférieure (233) a une construction à double paroi.

9. Module de coussin d'air du type rideau selon la revendication 2, dans lequel l'ouverture (231a) est agencée dans la paroi supérieure (231) ou la paroi arrière (232).

10. Module de coussin d'air du type rideau selon l'une quelconque des revendications 1 à 9, dans lequel au moins une partie du coussin d'air (102) est ajustée dans un couvercle (102a), une couche d'adhésif (456) étant fixée sur le couvercle (102a) pour fixer le couvercle sur une partie du véhicule.
